# EUROPÄISCHE PATENTSCHRIFT

(11) **EP 0 917 979 B1**
(45) Veröffentlichungstag und Bekanntmachung des Hinweises auf die Patenterteilung: **26.03.2008**
(21) Anmeldenummer: 97119996.3
(22) Anmeldetag: 14.11.1997
(51) Int. Cl.: B60L 9/00, B60L 3/04

(54) **Verfahren zur Störstrom- und Zustandsüberwachung in Schienenfahrzeugen**
Method for monitoring the interfering current and the state of railway vehicles
Méthode pour surveiller le courant parasit et l'état des véhicules ferroviares

(43) Veröffentlichungstag der Anmeldung: 26.05.1999
(73) Patentinhaber: Daimler AG, 70327 Stuttgart (DE)
(72) Erfinder: Würgler, Dieter, 3600 Thun (CH); Buhrkall, Lars, 6630 Rodding (DK); Mangold, Christian, 68549 Ilvesheim (DE); Terwiesch, Peter, 68535 Edingen (DE)
(74) Vertreter: Broydé, Marc

(56) Entgegenhaltungen:
- WO-A-96/41728
- COHEN A ET AL: "WAVELETS: THE MATHEMATICAL BACKGROUND" PROCEEDINGS OF THE IEEE, Bd. 84, Nr. 4, 1.April 1996, Seiten 514-522, XP000591729
- CODY M A: "THE WAVELET PACKET TRANSFORM" DR. DOBB'S JOURNAL, Bd. 19, Nr. 4, April 1994, Seiten 44-46, 50, 52, 54, 100 - 103, XP000600852

## Beschreibung

Die Erfindung bezieht sich auf ein Verfahren zur Durchführung einer Störstrom- oder Zustandsüberwachung mittels eines Störstrommonitors oder eines Zustandsmonitors in elektrisch betriebenen Schienenfahrzeugen, die über einen Stromabnehmer und einen Fahrdraht oder eine Stromschiene elektrische Energie aus einem Energienetz beziehen und gegebenenfalls im Bremsbetrieb dorthin rückspeisen.

Solche Schienenfahrzeuge benötigen elektrische Energie auf hohem Strom- und Spannungsniveau, um ihre Antriebsfunktion sowie zahlreiche Hilfsfunktionen erfüllen zu können. Bedingt sowohl durch den instationären Betrieb (Beschleunigen, Bremsen) als auch durch die verwendete Technik (z.B. Umrichter, aber auch andere nichtlineare Elemente wie Trafo etc.) ist die Stromaufnahme aus dem Netz notwendigerweise nicht ideal, weist also außer einer DC- bzw. grundfrequenten AC-Komponente immer auch Störanteile auf. Ein Nebeneffekt des hohen Leistungsniveaus ist, daß bei Fehlfunktionen im Fahrzeug Störungen der Umgebung, insbesondere auch von elektrischen Einrichtungen wie Signalanlagen oder Telekommunikationseinrichtungen, möglich werden. Wichtig für den zuverlässigen und sicheren Betrieb von Bahnsystemen ist es deshalb, daß auftretende Störungen rechtzeitig erkannt und je nach ihrer Schwere zu geeigneter Zeit behoben werden. Die Bandbreite möglicher Maßnahmen reicht dabei von der sofortigen Schutzabschaltung, z.B. bei plötzlichem Versagen einer wichtigen Komponente und dadurch bedingter massiver Überschreitung der im Hinblick auf eine Störung der Signalisierung erlaubten Störstromanteile, bis zum einfachen Datenbankeintrag, der bewirkt, daß bei der nächsten periodischen Wartung ein langsam verschleißendes und nicht sicherheitskritisches Teil ausgetauscht wird.

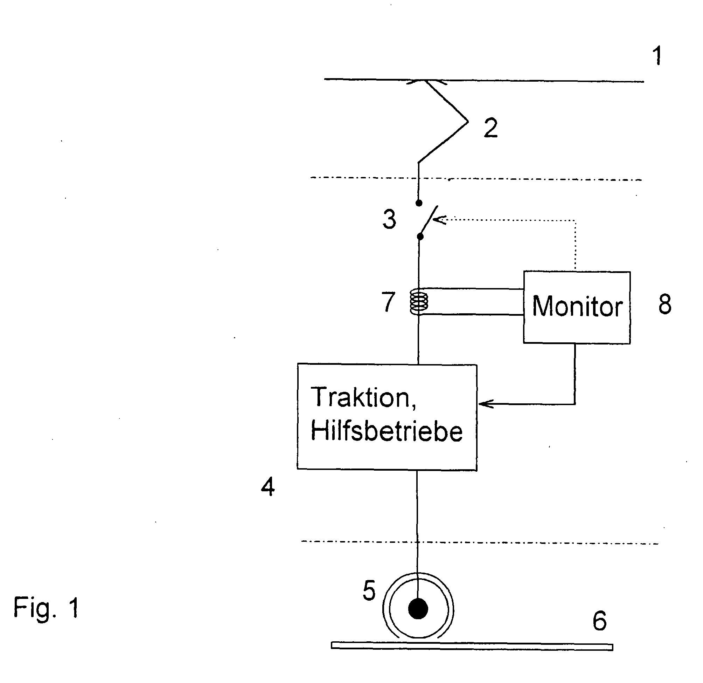

Fig. 1 zeigt das Grundkonzept eines einfachen Störstrommonitors, der auch als interference monitor bezeichnet wird.

Dabei ist schematisiert ein Strompfad für den Fahrzeugstrom aus einem Bahnenergienetz (Fahrleitung) 1 über einen Stromabnehmer 2, einen Hauptschalter 3, Antriebs- und Hilfsbetrieben (Traktionseinrichtung) 4, einem Fahrzeugrad 5 zu einer Schiene 6 dargestellt. Mit Hilfe eines oder mehrerer Meßglieder 7 wird der Primärstrom des Fahrzeugs (Fahrzeugstrom) erfaßt und in einem Monitor 8 verarbeitet. Registriert der Monitor 8 dabei eine Überschreitung vorgegebener Grenzen, so greift er daraufhin entweder direkt in die Traktionseinrichtung 4 ein oder trennt das Fahrzeug mittels des Hauptschalters 3 von der Fahrleitung 1 und damit vom elektrischen Netz.

Anstelle eines Störstrommonitors ist auch ein sogenannter Zustandsmonitor einsetzbar. Ein solcher allgemeinerer Zustandsmonitor übernimmt zusätzlich zur Funktion der Störstromüberwachung ("interference monitoring"), bei der es um den Schutz des gesamten Bahnsystems und nicht des Einzelfahrzeugs geht, auch noch die Schutzfunktion für das Fahrzeug ("vehicle protection"). Für diese Schutzfunktion werden kritische interne (z.B. Filterstrom) und externe (z.B. Netzspannung) Größen gemessen und verarbeitet, um bei Bedarf das Fahrzeug zum eigenen Schutz und zum Schutz stationärer Anlagen (Fahrleitung, Unterwerk) abzuschalten bzw. vom Netz zu trennen.

Die online-Überwachung sicherheitskritischer Meßgrößen bei Schienenfahrzeugen, etwa des Netzstroms und seiner oberfrequenten Anteile im Hinblick auf Beeinflussung von Signalanlagen ("interference monitoring") sowie zum Schutz des Fahrzeugs ("vehicle protection") ist allgemein bekannt.

Bei der Meßwertverarbeitung zu diesem Zweck ist die Verwendung von analogen oder digitalen Bandpassfiltern, von Fensterfunktionen im Zeitbereich (z.B. Rechteckfenster, Hanning-Fenster usw.; typischerweise überlappen sich diese Fenster), der diskreten Fourier-Transformation (=Transformation durch Faltung mit einem Referenzsignal der gewünschten Frequenz) sowie der schnellen Fourier-Transformation ebenfalls bekannt.

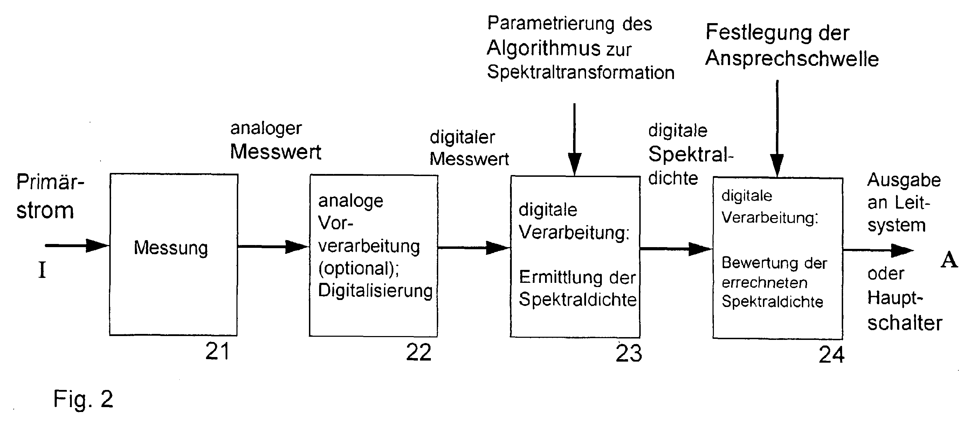

Eine bekannte generische Grundstruktur eines Störstrommonitors mit digitaler Verarbeitung zeigt Fig. 2. Dabei erfolgt in einem Block 21 eine Erfassung eines Primärstromes I als analoger Meßwert. In einem Block 22 - gegebenenfalls nach einer analogen Vorverarbeitung - erfolgt eine Digitalisierung des Meßwerts. In einem Block 23 wird mittels digitaler Verarbeitung die Spektraldichte von Störströmen ermittelt. In einem Block 24 erfolgt schließlich ebenfalls durch digitale Verarbeitung eine Bewertung der errechneten Spektraldichte anhand einer vorgegebenen Ansprechschwelle und es wird eine Ausgabe A gebildet, die an ein Leitsystem oder einen Hauptschalter des Fahrzeugs weitergegeben wird.

Zur Nachverarbeitung der ermittelten Spektraldichtewerte kann im Block 24 entweder ein vergleichsweise langes Zeitfenster analysiert werden, so daß dann bereits eine einzelne Überschreitung eines spektralen Grenzwerts eine Auslösung ("trip") des Monitors bewirkt, oder es können kürzere Fenster analysiert werden und für alle betrachteten Töpfe ("bins") Zeitbedingungen eingeführt werden, etwa eine Abschaltung erst nach N unmittelbar aufeinander folgenden Wiederholungen oder eine Nachverarbeitung mit einem einseitigen Verzögerungsglied, das Überschreitungen unmittelbar hochzählt, aber bei folgenden Unterschreitungen den Zähler nur mit reduzierter Geschwindigkeit wieder zurück setzt.

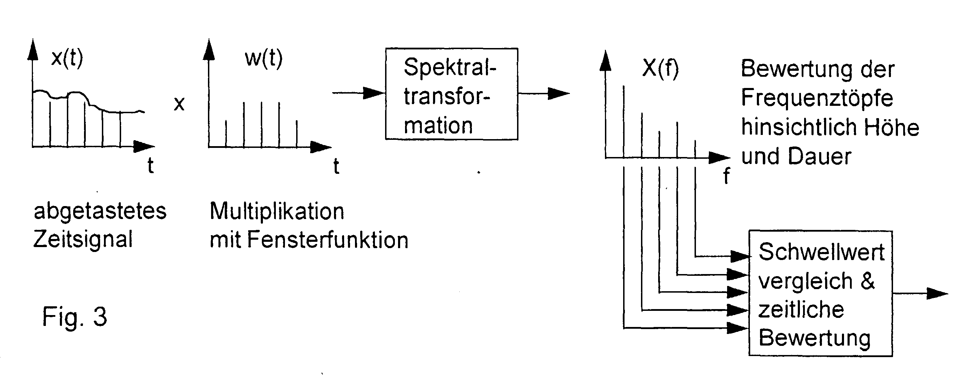

Die dabei übliche grundsätzliche Verarbeitungsstruktur ist in Fig. 3 dargestellt. Ausgehend von einem abgetasteten Zeitsignal x(t) werden durch eine Multiplikation mit Fensterfunktion Werte w(t) gebildet und durch Spektraltransformation Frequenztöpfe X(f) gewonnen. Diese werden durch Vergleich mit einem vorgegebenen Schwellwert bezüglich Höhe und Dauer bewertet zur Bildung des Ausgangssignals A.

Ein Nachteil der bekannten, in den Fig. 2 und 3 dargestellten Störüberwachungsverfahren besteht darin, daß diese typischerweise für stationäre Betriebszustände ausgelegt sind und daß ihr Verhalten bei Auftreten von Transienten oder Kontaktproblemen am Stromabnehmer (z.B. Pantographen) deshalb häufig Schwierigkeiten bereitet. Wird die Überwachung, also der Monitor "scharf" eingestellt, so löst das Gerät bei vielen auftretenden Transienten aus, wodurch die Verfügbarkeit des Fahrzeugs drastisch reduziert werden kann. Wird sie hingegen "toleranter" eingestellt, typischerweise durch Einfügen von empirischen Zeitbedingungen, so ist es schwierig, die Sicherheit des Systems zu gewährleisten. Aus diesem Konflikt zwischen Sicherheit und Verfügbarkeit heraus haben sich einige Betreiber von Schienenverkehrssystemen vollständig gegen die Verwendung von Störstrommonitoren ausgesprochen, während andere auf Monitoren bestehen, die zudem einen sehr hohen Sicherheitsstandard aufweisen müssen.

Ein Verfahren zur Störstrom- und Zustandsüberwachung in Schienenfahrzeugen gemäß dem Oberbegriff des Anspruchs 1 ist aus der Schrift WO 96/41728 bekannt.

Ein weiterer Nachteil der bekannten Verfahren ist der Rechenaufwand, der bei der digitalen Verarbeitung zur Erreichung einer bestimmten Zeit- und Frequenzauflösung benötigt wird.

Der Erfindung liegt die Aufgabe zugrunde, Verfahren zur Bildung von Ausgabesignalen eines Störstrommonitors oder eines Zustandsmonitors eines elektrischen Schienenfahrzeuges anzugeben, mit denen Anforderungen an Sicherheit und Verfügbarkeit besser entsprochen werden kann.

Solche Verbesserungen werden bei einem Überwachungsverfahren mit den im Anspruch 1 angegebenen Merkmalen durch Verwendung eines mehrstufigen Systems von Ansprechschwellen zur Bewertung einer ermittelten Spektraldichte erreicht. Vorteilhafte Ausgestaltungen sind in abhängigen Ansprüchen angegeben.

Die vorgeschlagenen Maßnahmen zur Verbesserung des Verfahrens haben den Vorteil, daß ein Fahrzeugbetrieb mit deutlich weniger Fehlauslösungen erzielt wird.

Eine weitere Beschreibung der Erfindung und deren Vorteile erfolgt nachstehend anhand von Ausführungsbeispielen und der Zeichnungsfiguren.

Es zeigen:
- Fig. 1: eine schematische Darstellung des Strompfads in einem Schienenfahrzeug und die Anordnung eines Monitors (Stand der Technik),
- Fig. 2: die Grundstruktur eines Störstrommonitors (Stand der Technik),
- Fig. 3: die Struktur der Signalverarbeitung (Stand der Technik),
- Fig. 4: eine Darstellung der Signalauswertung mittels unterschiedlicher Ansprechschwellen,
- Fig. 5: die Grundstruktur eines Störstrommonitors mit erfindungsgemäßen Erweiterungen, und
- Fig. 6: in einem oberen Teil der Darstellung eine Transformation mit Hilfe einer Wavelet- oder Wavelet-Packet-Filterbank; im unteren Teil ist eine Verarbeitung innerhalb der Filterbank in einem ausgewählten Frequenzbereich dargestellt.

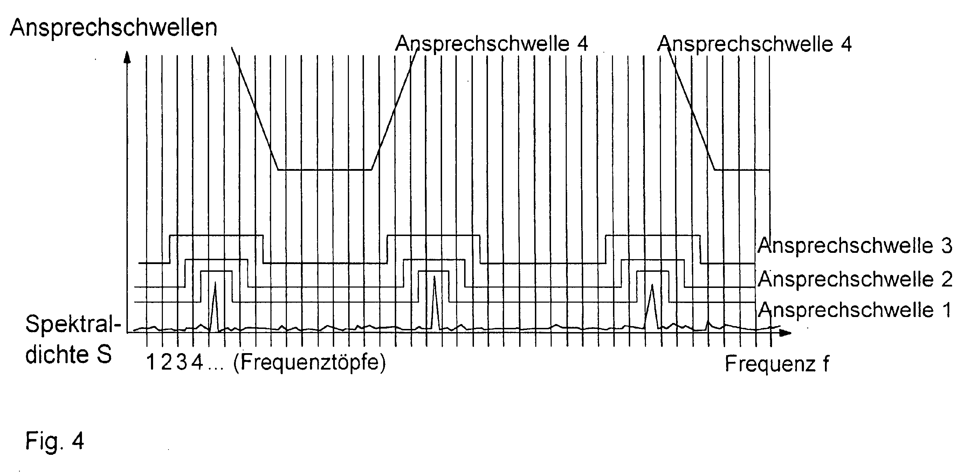

Eine erste und besonders wesentliche erfindungsgemäße Maßnahme besteht in der Bewertung der ermittelten Spektraldichten mit einem mehrstufigen System von Ansprechschwellen, wie in Fig. 4 beispielhaft dargestellt ist.

In Fig. 4 sind über der Frequenz f ein Signal S als Ergebnis einer Spektraltransformation sowie vier unterschiedliche Ansprechschwellen 1 bis 4 aufgetragen.

Die Bedeutung dieser Ansprechschwellen und ihre Vorteile werden nachstehend erläutert.

Die Sicherheit des gesamten Verkehrssystems hängt einerseits von den Bedingungen im Fahrzeug, z.B. Störstrompegel bei einer bestimmten Frequenz während einer *bestimmten* Zeit, und andererseits von den Umgebungsbedingungen z.B. gebrochene Schiene im Bereich eines sehr ausgedehnten Gleisfrei-Meldekreises, ab. Beide dürfen als voneinander statistisch unabhängig betrachtet werden; zudem ist der *worst case* der Umgebungsbedingungen ein vergleichsweise extrem unwahrscheinlicher Fall. Das bisherige Konzept hat die Bedingungen im Fahrzeug ständig im Hinblick auf den *worst case* bewertet. Das neue Konzept sieht hingegen vor, kurzzeitige Überschreitungen der vom *worst* case hergeleiteten Bedingungen im Fahrzeug, wie sie etwa während Transienten oder aufgrund von Kontaktproblemen am Stromabnehmer entstehen können, zu tolerieren, sofern sie
• hinreichend selten genug sind, daß die Gesamtsystemsicherheit im geforderten probabilistischen Ausmaß gewährleistet bleibt, und
• hinreichend klein sind, so daß nicht auch unter wahrscheinlicheren Umgebungsbedingungen die Sicherheit beeinträchtigt würde.

Zu diesem Zweck wird ein System von mehrstufigen Ansprechschwellen in der Bewertung eingeführt, das beispielhaft in Fig. 4 gezeigt ist. Dieses System erlaubt eine Überprüfung der tatsächlichen Häufigkeit, mit der die jeweiligen Schwellen überschritten werden. Damit kann gewährleistet werden, daß z.B. mehr als 90% der Zeit die erste Schwelle eingehalten werden muß, 99% der Zeit Schwelle 2, und so weiter, bis schließlich als harte Begrenzung auf dem höchsten Schwellen-Niveau in allen Fällen ausgeschlossen werden muß, daß eine Signalanlage ohne äußeren Fehlerfall (keine gebrochene Schiene etc.) gestört wird.

Als Bezugszeit für diese relative Häufigkeit kann beispielsweise die Zeit zwischen zwei Überprüfungen des Fahrzeugs eingesetzt werden. Bleibt die Zählung der jeweiligen Überschreitungen unter ihrem statistisch zulässigen Wert, so dürfen die Zähler auf Null zurück gesetzt werden. Wird hingegen die Vorgabe überschritten, so wird eine detailliertere Überprüfung des Fahrzeugs bezüglich möglicher Fehlerursachen nötig. Beachtenswert ist, daß die vorgeschlagene neue Art der Arbeitsweise des Monitors den klassischen Monitor mit nur einstufiger Ansprechschwelle als entsprechend konfigurierbaren Spezialfall enthält.

Eine zweite Neuerung ist optional und betrifft das explizite Erkennen von Transienten. In einigen Fällen ist es möglich, eine bei der Bewertung erkannte Überschreitung einer Ansprechschwelle eindeutig auf eine Transiente zurückzuführen. Aus vorherigen Untersuchungen muß bekannt sein, welche Transienten für die Infrastruktur unkritisch sind, obwohl die stationären Grenzwerte kurzzeitig überschritten werden. Eine solche Transientenerkennung kann beispielsweise auf einem Mustervergleich mit bekannten gemessenen oder simulierten Transienten beruhen. Ist als Ursache einer Schwellwertüberschreitung eine als unkritisch einzustufende Transiente, z.B. verursacht durch Schleudervorgänge oder Bügelsprünge, zweifelsfrei erkannt worden, so wird diese Überschreitung nicht mitgezählt.

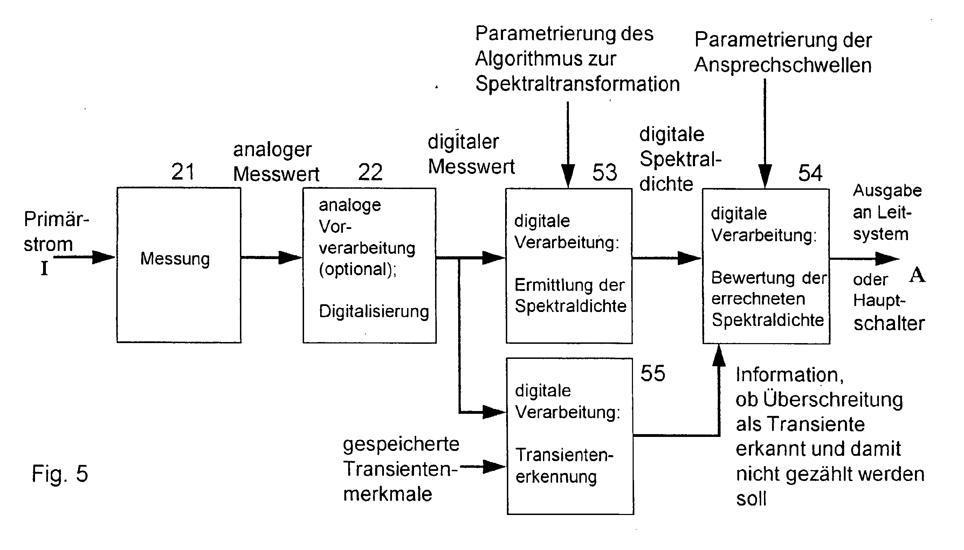

Fig. 5 zeigt die Grundstruktur eines Störstrommonitors mit den erfindungsgemäßen Erweiterungen zur Transientenerkennung und zur Auswertung mittels eines Ansprechsschwellen-Systems. Die Funktionen der Blöcke 21 und 22 stimmen überein mit den in Fig. 2 gezeigten Blöcken 21 und 22. Die digitale Verarbeitung im Block 53 kann übereinstimmen mit der Verarbeitung gemäß Block 23 (Fig. 2), kann aber auch vorteilhaft unter Anwendung anderer Algorithmen erfolgen, wie weiter unten als dritte Neuerung erläutert wird. Mit 55 ist ein Block mit Verarbeitungsfunktionen zur Transientenerkennung bezeichnet, mit 54 ein Block zur Bewertung der Spektraldichte mittels mehrerer Ansprechschwellen, die parametrierbar sind.

Eine dritte Neuerung ist ebenfalls optional und betrifft die rechnerische Verarbeitung, die auch für Monitore mit mehreren Ansprechschwellen verwendbar ist. Zur *digitalen Verarbeitung* im Bereich *Ermittlung der Spektraldichte,* also im Block 53 (Fig. 5) kann entweder eines der zu diesem Zweck bereits eingesetzten Verfahren (wie schnelle Fouriertransformation oder diskrete Fouriertransformation) verwendet werden, oder es kann eine Multiraten-Signalverarbeitung, z.B. "Fast Wavelet Transform" oder "Wavelet Packet Transform" durchgeführt werden. Solche Verfahren sind beispielsweise beschrieben in A. Cohen, J. Kovacevic; Wavelets: The Mathematical Background; Proceedings of the IEEE, vol 84, no 4, pp. 514-522, April 1996, sowie in M. A. Cody; The Wavelet Packet Transform. Dr. Dobb's Journal, April 1994, pp. 44-54, und in N. Fliege; Multiratensignalverarbeitung, Verlag B. G. Teubner, Stuttgart, 1993.

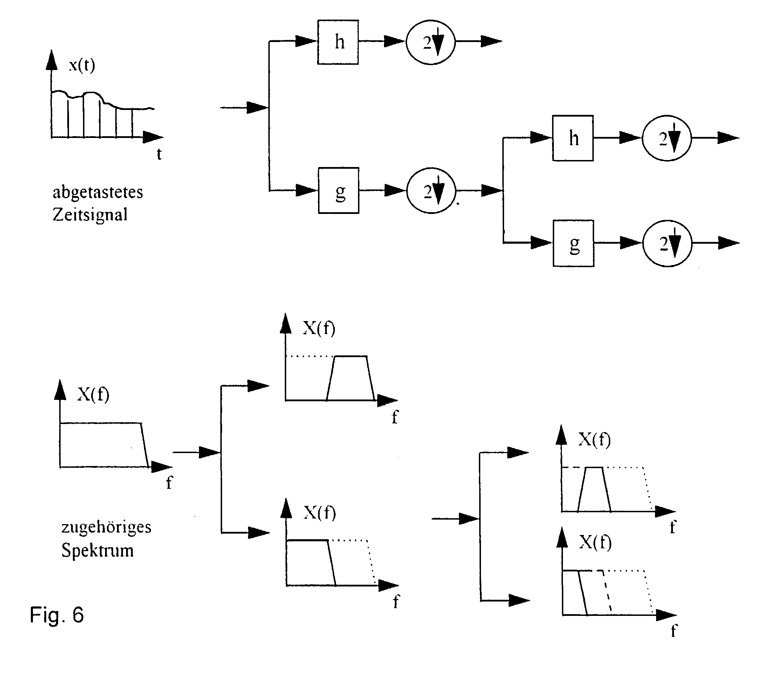

Fig. 6 zeigt die Durchführung der Transformation mit Hilfe von Multiraten-Signalverarbeitung, etwa der Wavelet- oder Wavelet-Packet-Transformation. Der obere Teil der Fig. 6 zeigt, wie ein Zeitsignal x(t) ohne vorherige Fensterung mit Hilfe einer Wavelet- oder Wavelet-Packet-Filterung in einem ersten Schritt in einen höher- und einen niederfrequenten Anteil zerlegt wird. Diese Art der spektralen Zerlegung ist auch In mehr als zwei gleiche Teile möglich, allgemein spricht man bei solchen Zerlegungen von Quadraturnetzwerken oder "quadrature mirror filters". Auf der rechten Seite erhält man, bei geeigneter Wahl der Basisfunktionen ("mother wavelets") für den Filterentwurf direkt ein Ergebnis, das zwar nicht identisch, aber von der Verwendung her übereinstimmend mit den Töpfen ("bins") der Fouriertransformation inklusive zeitlicher Fensterung und zeitlicher Integration der Spektren sein kann. Die Kreise zeigen dabei an, daß bei einer Multiraten-Filterung im gezeigten Fall auf jedem Filterast mit Eingang *N* Datenpunkten am Ausgang nur jeweils *N*/2 Datenpunkte herauskommen. Eine Verallgemeinerung von 2 auf *M* Filteräste und damit je Ast *N*/*M* Datenpunkte ist möglich. Mit g und h sind Filter bezeichnet, die man auch als quadrature mirror filter pair bezeichnet.

Die Darstellung im unteren Teil der Fig. 6 läßt auch erkennen, daß es möglich ist, nur diejenigen Teile des Filterbaums zu rechnen, die für zu kontrollierende *bins* auch tatsächlich benötigt werden. Darin liegt ein Unterschied zwischen Wavelet-Transformation, bei der jeweils nur der tieferfrequente Anteil weiter zerlegt wird, und Wavelet-Packet-Transformation, bei der der Baum eine maßgeschneiderte Form haben kann.

Ein erster Vorteil der Multiraten-Signalverarbeitung an dieser Stelle ist der geringere Rechenaufwand der Multiratenverfahren (Komplexität: Ordnung *N* Operationen für die schnelle Wavelet-Transformation mit Pyramidenalgorithmus, gegenüber *N* log *N* Operationen bei der schnellen Fouriertransformation). Der zweite Vorteil ist, daß diese Verfahren eine Zeit-Frequenz-Analyse erlauben, so daß eine Kombination der beiden Schritte *Ermittlung der Spektraldichte* und *Bewertung* (in Bezug auf Zeitkriterien) möglich wird. Der dritte Vorteil besteht darin, daß es die Wavelet-Packet-Transformation erlaubt, maßgeschneidert Werte nur für diejenigen Töpfe zu berechnen, die tatsächlich auch bewertet werden sollen.

Eine vierte Neuerung betrifft den Ort der Messung. Neben der Meßgröße Fahrzeugstrom können auch eine oder mehrere elektrische Größen herangezogen werden, welche besser von Umgebungseinflüssen isoliert sind, aber in denen eine Störung des Fahrzeuges ebenfalls erkennbar ist. Dies gilt beispielsweise für die Überwachung der Zwischenkreisspannung.

Im Sinne eines Health Monitorings reagiert eine solche Überwachung selektiver auf Fehler im Fahrzeug, hat mehr Störabstand und bewirkt somit weniger Fehlauslösungen. Einzelfehler können frühzeitig erkannt werden, auch wenn sie erst in Kombination mit weiteren Defekten, wie z.B. Ausfall von Filterkomponenten, eine gefährliche Auswirkung auf den Netzstrom haben. Voraussetzung ist allerdings, daß die zwischen der gewählten Meßgröße und dem Netzstrom liegenden Elemente, z.B. ein zwischengeschaltetes Filter, ordnungsgemäß funktionieren. Um zu verhindern, daß ein Ausfall zwischengeschalteter Komponenten, wie z.B. Filter, unbemerkt bleibt, können diese Komponenten überwacht werden, z.B. durch Vergleich (Korrelationsfunktion) von verschiedenen Meßgrößen, beispielsweise der Zwischenkreisspannung und des Fahrzeugstroms.

## Patentansprüche

1. Verfahren zur Bildung von Ausgabesignalen eines Störstrommonitors oder eines Zustandsmonitors eines elektrischen Schienenfahrzeugs mit Strombezug aus einem und gegebenenfalls auch Rücklieferung eines Stromes in ein Energienetz über einen Stromabnehmer, wobei der Zustandsmonitor neben Störströmen auch weitere Fehlerzustände erkennt und meldet, wobei die Ausgangssignale zu einem Hauptschalter oder zu einem Leitsystem des Fahrzeugs geleitet werden, und wobei das Verfahren nachstehende Schritte aufweist:
a) meßtechnische Erfassung und Digitalisierung des über den Stromabnehmer fließenden Fahrzeugstroms oder anderer Meßgrößen, die auf Fahrzeugzustände schließen lassen, die zu Störströmen führen, und
b) digitale Verarbeitung dieser Meßwerte mit Ermittlung der Spektraldichte von Störströmen oder von Störwerten der anderen Meßgrößen, **dadurch gekennzeichnet, daß** zur Bewertung der Spektraldichte im Schritt b) ein mehrstufiges System von Ansprechschwellen benutzt wird.

2. Verfahren nach Anspruch 1, **dadurch gekennzeichnet, daß** bei Überschreitungen von Ansprechschwellen geprüft wird, ob diese auf eine Transiente zurückzuführen sind, von der aufgrund vorausgegangener Untersuchungen bekannt ist, daß sie für die Infrastruktur unkritisch ist, wobei solche Überschreitungen bei der Bildung der Ausgangssignale unberücksichtigt bleiben.

3. Verfahren nach Anspruch 1 oder 2, **dadurch gekennzeichnet, daß** die Ermittlung der Spektraldichte mittels Multiraten-Signalverarbeitung, wie "Fast Wavelet Transform" oder Wavelet Packet Transform" durchgeführt wird.

4. Verfahren nach einem der vorstehenden Ansprüche, **dadurch gekennzeichnet, daß** als eine andere Meßgröße anstelle oder zusätzlich zur Erfassung des über den Stromabnehmer fließenden Fahrzeugstroms die Zwischenkreisspannung eines Umrichtersystems des Fahrzeugs herangezogen wird.

## Claims

1. Method for forming output signals of an interference monitor or a status monitor of an electric rail vehicle obtaining current from and if appropriate also returning a current to a power network via a pantograph, with the status monitor also recognising and reporting other error statuses in addition to interference currents, with the output signals being conducted to a main switch or a guidance system of the vehicle and with the method having the following stages:
a) metrological recording and digitisation of the vehicle current flowing over the pantograph or other parameters which allow conclusions on vehicle statuses that results in interference currents and
b) digital processing of these measurement values with determination of the spectral density of interference currents or interference values of the other parameters, **characterised in that** for assessment of the spectral density in stage b), a multiple stage system of response thresholds is used.

2. Method according to claim 1, **characterised in that** a test is performed in case response thresholds are exceeded to determine whether they are to be attributed to a transient, of which it is known based on previous studies that it is uncritical for the infrastructure, with such exceeding of thresholds remaining disregarded in formation of the output signals.

3. Method according to claim 1 or 2, **characterised in that** the spectral density is determined by means of multi-rate signal processing, such as "fast wavelet transform" or "wavelet packet transform".

4. Method according to one of the above claims, **characterised in that** the intermediate circuit voltage of a rectifier system of the vehicle is called upon as another parameter instead of or in addition to recording of the vehicle current flowing over the pantograph.

## Revendications

1. Procédé permettant de générer des signaux de sortie d'un système de contrôle du courant parasite ou d'un système de contrôle d'état d'un véhicule ferroviaire électrique, avec une consommation de courant à partir de, et, le cas échéant, également un retour du courant dans un réseau fournisseur d'énergie par l'intermédiaire d'un pantographe, moyennant quoi le système de contrôle d'état, outre les courants parasites, détecte et communique également d'autres conditions d'erreurs, moyennant quoi les signaux de sortie sont acheminés vers un commutateur principal ou vers un système conducteur du véhicule, et moyennant quoi le procédé comprend les étapes suivantes :
a) détection selon la technique de mesure et numérisation du courant du véhicule passant par le pantographe ou d'autres grandeurs de mesure qui révèlent des états du véhicule donnant lieu à des courants parasites, et
b) traitement numérique de ces valeurs de mesure avec une détermination de la densité spectrale des courants parasites ou des valeurs parasites des autres grandeurs de mesure,
**caractérisé en ce que**, pour évaluer la densité spectrale, on utilise à l'étape b) un système à plusieurs degrés de seuils de réponse.

2. Procédé selon la revendication 1, **caractérisé en ce que**, en cas de dépassement des seuils de réponse, on vérifie si ceux-ci découlent d'un transitoire dont on sait, d'après les analyses précédentes, qu'il n'est pas critique pour l'infrastructure, moyennant quoi ces dépassements ne sont pas pris en considération lors de la génération des signaux de sortie.

3. Procédé selon la revendication 1 ou 2, **caractérisé en ce que** la détermination de la densité spectrale est réalisée à l'aide d'un traitement de signaux à plusieurs vitesses, tel que la transformée en ondelettes rapide ou la transformée en paquets d'ondelettes.

4. Procédé selon l'une quelconque des revendications précédentes, **caractérisé en ce que**, en tant qu'autre grandeur de mesure, au lieu ou en plus de la détection du courant du véhicule passant par le pantographe, on fait intervenir la tension du circuit intermédiaire d'un système convertisseur du véhicule.
